# EUROPEAN PATENT SPECIFICATION

(11) **EP 1 615 311 B1**
(45) Date of publication and mention of the grant of the patent: **09.09.2009**
(21) Application number: 04380137.2
(22) Date of filing: 06.07.2004
(51) Int. Cl.: H02G 3/22, F16L 5/08

(54) **Watertight feedthrough wall fitting**
Wasserdichte Wanddurchführung
Traversée murale étanche

(43) Date of publication of application: 11.01.2006
(73) Proprietor: PREFABRICADOS UNIBLOK,S.L.U., 45223 Seseña Toledo (ES)
(72) Inventor: Baron Mendez, Emilio, 45223 Seseña (Toledo) (ES); Apraiz Eguileor, Juan Maria, 45223 Seseña (Toledo) (ES)
(74) Representative: Carpintero Lopez, Francisco

(56) References cited:
- EP-A- 0 862 254
- WO-A-01/57981
- GB-A- 1 002 864

## Description

### OBJECT OF THE INVENTION

The present invention refers to a watertight feedthrough wall fitting composed of a sealing element that fits into and runs through a hole in a wall, floor, ceiling or similar structure, so that it permits the sealed passage of cables, pipes, etc. through it.

The system is completed with clamping rings that assure the perfect tightness of the hole seal.

The wall fitting that is the object of the invention has special application in those structures where cables, pipes, etc. have to be run between independent or sealed compartments, maintaining the perfect tightness of the structure in question.

### BACKGROUND OF THE INVENTION

In an electrical distribution network it is common to find transformation centres which may be either surface or underground according to their placement. In both cases the feeding of cables through holes made in the actual peripheral envelope is common, i.e. through the walls, floors or ceilings of these transformation centres, both for underground and overhead distribution.

Holes made for running cables must be perfectly watertight to prevent ground moisture, water or other elements getting into transformation centres which could bring about the ageing of the installations or destruction of the equipment items included in the enclosure. This problem is exacerbated when the cables run through a wall, floor or ceiling which lies below the ground water level.

There are different systems for feeding cables through holes, such as for instance the fitting systems represented in patents DE 3322809 and DE 19715885, made up of a series of individual parts, which may be formed of two halves to facilitate cables running through their inside and which at the time they are inserted into the hole are subjected to an axial compression effect which produces radial expansion, so that sealing is achieved both between the cables and the individual parts and between the hole and such parts.

The use of different parts for conforming the fitting system entails complex installation operations and a high manufacturing cost. Furthermore, due to the due diameters of the cables different sets of fitting parts are required resulting in impaired flexibility when it comes to on-site installation.

Another solution similar to the preceding one may for instance be that of a fitting system made up of a flexible cylindrical piece with its respective holes through which the cables are run, said piece being installed between two round plates and identical holes for the cables, in such a way that both the plates and the flexible piece comprise a series of slots. For the cables to be inserted in their respective holes, the system opens at said slots in such a way that the flexible piece is deformed at certain points and returns to its original state once the cables have been inserted. In this respect, we may cite US Patent 4993724, where reference is made to a fitting system comprising these features. As in the previous solution, this fitting system represents a high manufacturing cost due to its complex design, complicated installation operations and the need for holes of different diameters for running the cables through.

Another fitting system may be, for example, that described in Patent EP 1164677, which is made up of a flexible cylindrical piece and rings, which, once the flexible piece is inserted in the hole, compress this flexible piece axially by means of tightening up some screws. This fitting system has the drawback that when it is installed inside the hole its placement may be altered due to the fact that how far it is installed in the hole may vary, thus making the installation jobs more complicated. Furthermore, it has the added drawback that, once installed, interstices may remain between the flexible piece and the screws, thereby preventing the hole from being tightly sealed.

Solutions may also be found in which the fitting is a one-piece body that is fastened to the surface of the wall framing the hole and which incorporates a plurality of protuberances aligned for the passage of the cables, such as that described for instance in Patent ES 2195736. The fastening of fittings only on the side of the wall facing outwards entails the problem that the hole cannot be perfectly sealed due to the fact that interstices may remain between the wall and the part of the fitting that is fixed to the wall as a result of the stress that may appear in the piece when conforming the cables to run them through their holes or the pressure of the ground when compacted. In addition, the aligned protuberances for the passage of the cables turn the fitting into an element with a large perimeter, which means there is a greater possibility of moisture filtrations.

An example of a prior art feedthrough wall fitting according to the preamble of claim 1 is disclosed in WO-A-01/57981.

### DESCRIPTION OF THE INVENTION

The feedthrough wall fitting in question is intended to permit the running of different elements, such as cables, pipes, etc. through a hole made in a wall, in the floor, in a ceiling or in a similar structure, maintaining perfect tightness both between the elements running through the wall fitting and the wall fitting itself and between the wall fitting and the hole.

This is achieved by the features of claim 1.

The feedthrough wall fitting that is the object of this invention is made up of a body formed of a leak-tight piece which is inserted in the hole until one of its ends, which is finished with a perimeter overlap, comes up against the outside edge of the hole, so that the body of the wall fitting is fitted in the hole.

The feedthrough wall fitting is completed with tightening elements consisting of a pair of rings that are fitted on either side of the hole, so that the fastening of same tightens the body of the wall fitting against the outside edge of the hole thereby creating a completely watertight wall fitting system to prevent water, ground moisture or any other element from entering the enclosure, all with a simple design and installation that reduce its cost considerably.

On one of its faces the body of the wall fitting presents a series of protuberances, for the housing of the elements that pass through it, which are composed of a series of cylindrical portions of different diameters which may be cut at different levels to adapt to the diameter of the element running through the body of the wall fitting. It is also foreseen that these elements should be pressed tight in their respective frustoconical protuberances by means of outside tightening means, such as clamps for instance, so that perfect sealing is assured between said elements and the wall fitting system and elements of different diameters may also be accommodated.

The frustoconical protuberances designed for the passage of the aforementioned elements may have a different distribution, which may be triangular or quadrangular for instance, considering as such the geometrical form that defines the axis of the elements running through said protuberances, thereby reducing the size of the wall fitting.

### DESCRIPTION OF THE DRAWINGS

Figure 1 - It represents a perspective view of the feedthrough wall fitting that is the object of the invention composed of a body, in the form of a cap, with a series of protuberances for feeding the cables through and through-holes for its anchorage to the respective hole.
Figure 2 - It represents a perspective view of the sealing rings which have through-holes for their fastening by means of screws.
Figure 3 - It represents a sectional view of the feedthrough wall fitting of the invention installed in the respective hole.
Figure 4 - It shows a perspective view of the sealing element, from a position opposite to that of figure 1.
Figure - 5 It shows a perspective view of the feedthrough wall fitting that is the object of the present invention with rings of figure 2 installed on the wall fitting.

### PREFERRED EMBODIMENT OF THE INVENTION

An embodiment of the watertight feedthrough wall fitting or, as the case may be, of the feedthrough fitting, when the application is solely for the feedthrough of cables, which is the object of the present invention is presented as an illustrative and non-restrictive example below.

The watertight feedthrough fitting (1) that is the object of this invention is made up of a sealing body (2) obtained in one piece from an elastomeric material, for example neoprene, EPDM, etc. presenting a sensibly cylindrical shape, in the form of a cap, closed at one end and open at the other.

The sealing body (2) contains in its closed part a series of frustoconical protuberances (14), which are made up of a series of cylindrical portions (16) of different diameters and closed at their free end, so that, depending on the diameter of the cable that is going to be run through them, they may be split up and a cable of the same diameter accommodated inside them.

After inserting the cables in the respective cylindrical portions (16), these cylindrical portions are tightened against the surface of the cables by means of anchoring elements, for instance tightening clamps, so that watertightness is assured between the cables and the sealing element (2).

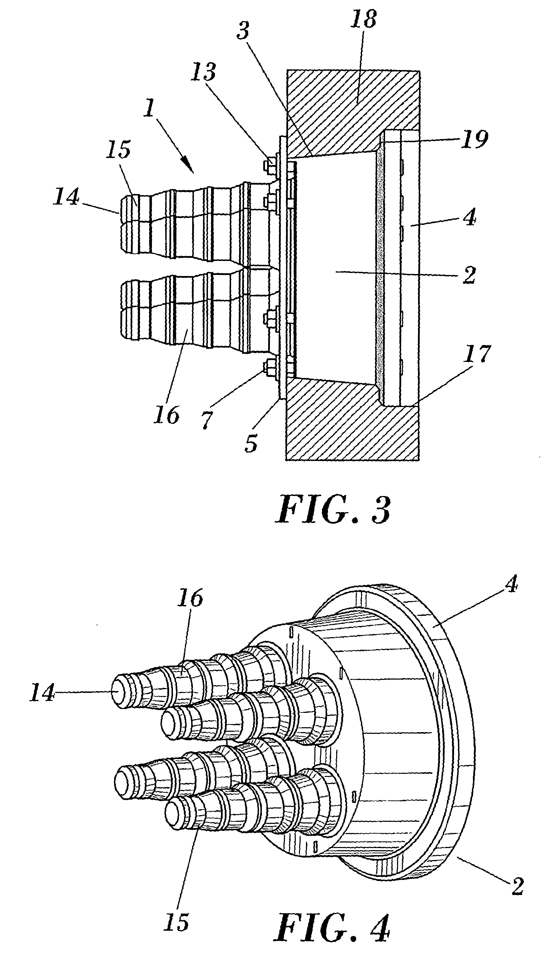

As a preventive measure, to stop the axial movement of the clamps on these portions (16) each one of these is provided with a perimeter rib (15) as shown in figures 3 and 4.

At its open end the sealing body (2) presents a perimeter overlap (4) with a diameter larger than that of the hole (3), which rests against one of the outer walls of the hole, while on the closed end of the sealing body (2) a ring (5) is fitted that is coupled on the other wall, so that sealing is achieved by means of the clamp screws (7).

The sealing body (2) is inserted lengthwise into the hole (3) in the wall (18) until the perimeter overlap (4) comes up against the outer wall (19), housed inside the hole (3) but with the cylindrical portions (16) on the outside. In the event of the hole (3) in the wall having a larger diameter mouth (17), the perimeter overlap (4) is coupled radially against the side wall of the aforesaid mouth (17), as represented in figure 3.

The watertight feedthrough fitting (1) is completed with rings (5) and (6), with a diameter larger than that of the hole (3), by means of which the sealing body (2) is fixed inside the hole (3), so that part of the wall (18) lies in the middle of both rings (5) and (6), as shown in figure 3. The rings (5) and (6) may be one piece or be made up of separate segments so as to achieve a better fit on the wall surface.

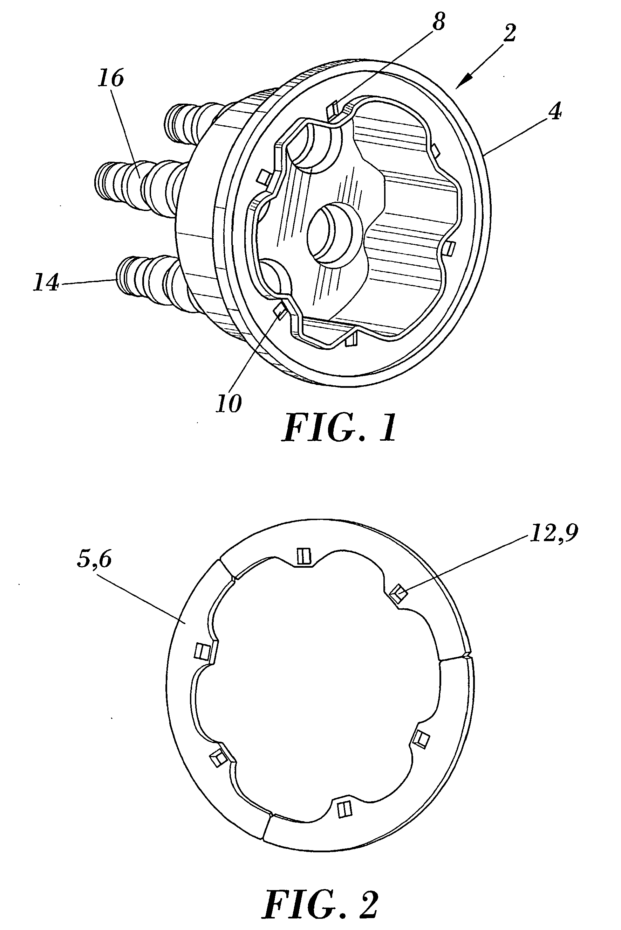

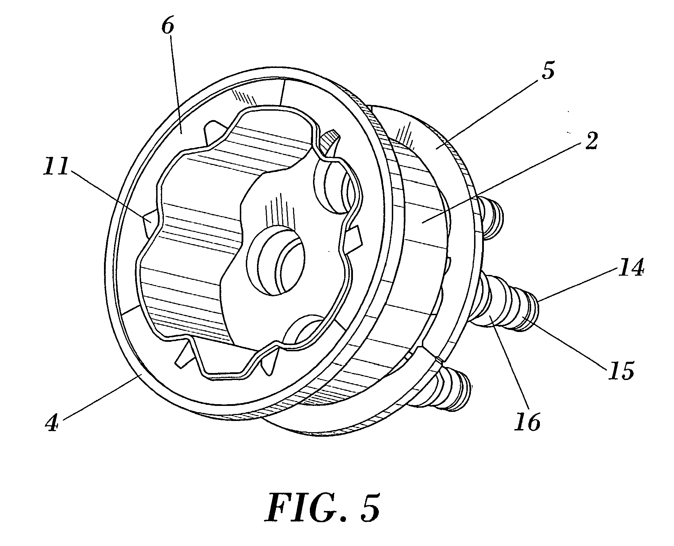

Furthermore, the sealing body (2) comprises a series of through-holes (8) with protuberances (10) on the overlap side (4), so that the ring is installed on the overlap (4), said protuberances (10) engaging in through-holes (9) corresponding to the ring (6), as represented in figures 1 and 5.

Once the ring (6) is fitted on the overlap (4), rectangular-neck screws (7) are inserted by way of the holes (9) in the ring (6) traversing the through-holes (8) in the sealing body (2) and the through-holes (12) in the ring (5), so that both rings (5) and (6) are successfully tightened against the wall (18) by means of nuts threaded (13) to these screws (7) and the rectangular neck of the screws (7) in turn compresses the protuberances (10) of the sealing body (2), in this way making the through-holes (8) and (9) fully watertight.

Similarly, the overlap (4) is compressed axially between the surface (19) and the ring (6) and expanded axially radially between the mouth (17) of the hole (3) and the ring (6), thereby assuring perfect sealing between the wall (18) and the feedthrough wall fitting system (1), as shown in figures 3 and 5.

## Claims

1. Watertight feedthrough wall fitting that covers a hole provided in a wall, in the floor or in a ceiling, comprising a sealing body (2) in the form of a cap, open at one of its ends and closed at the other, which is housed inside the hole (3), said body (2) comprising on one of its sides a perimeter overlap (4) of a diameter larger than the hole (3) which comes up against one of the outer walls (19) of the hole (3),
**characterised in that** it further comprises a first ring (5) of a diameter larger than the hole (3) which is fitted on the opposite side to that of the overlap (4), resting on the other outer wall of the hole (3), with part of the wall (18) between the overlap (4) and the first ring (5).

2. Watertight feedthrough wall fitting according to claim 1, **characterised in that** it comprises a second ring (6) of larger diameter than the hole (3), which is fitted on the overlap (4).

3. Watertight feedthrough wall fitting according to claim 2, **characterised in that** the rings (5,6) are made up of various separate segments.

4. Watertight feedthrough wall fitting according to claim 2 or 3, **characterised in that** rings (5,6) are installed on the body (2) of the wall fitting by means of bolts (7) that bring them closer to each other, with the assistance of the respective nuts (13), so that the overlap (4) is compressed axially between the surface (19) and the second ring (6), while the first ring (5) is pressed against the body (2) of the wall fitting and the other outer wall of the hole (3).

5. Watertight feedthrough wall fitting according to claim 4, **characterised in that** the diameter of the perimeter overlap (4) coincides with the diameter of a stepped expansion (17) of the hole (3), so that by action of the bolts (7) the perimeter overlap (4) is expanded radially between the perimeter surface of the mouth (17) and the second ring (6).

6. Watertight feedthrough wall fitting according to claim 4, **characterised in that** the rings (5,6) present inward-facing radial extensions which are provided with through holes (9,12) that match up positionwise with through holes (8) provided in the body (2) of the wall fitting for inserting the bolts (7)

7. Watertight feedthrough wall fitting according to claim 6, **characterised in that** the through holes (8) of the sealing clement (2) comprise protuberances (10) that engage in the through-holes (9) in the second ring (6) in such a way that the head (11) of the bolts (7) comes up against the second ring (6), exerting pressure on the protuberances (10) and sealing the holes (8,9) tightly.

8. Watertight feedthrough wall fitting according to claim 1 **characterised in that** the closed part of the body (2) includes a series of frustoconical-shaped protuberances (14).

9. Watertight feedthrough wall fitting according to claim 8, **characterised in that** these protuberances (14) are made up of a series of cylindrical portions (16) of different diameters which get gradually smaller towards the free end and which may be separated out at different levels according to the diameter of the cable that passes through each of them.

10. Watertight feedthrough wall fitting according to claim 9, **characterised in that** the portion (16) is pressed against the surface of the element that passes through it by means of a clamping element.

11. Watertight feedthrough wall fitting according to claim 10, **characterised in that** each cylindrical portion (16) of the protuberances (14) has a perimeter rib (15) which prevents the axial movement of the clamping element.

## Patentansprüche

1. Wasserdichte Wanddurchführung, die ein in einer Wand, in einem Fußboden oder in einer Decke befindliches Loch abdeckt und einen abdichtenden Körper (2) in Form einer Kappe, die an einem ihrer Enden offen und am anderen Ende geschlossen ist, umfasst, der in dem Loch (3) sitzt, wobei der Körper (2) auf einer seiner Seiten eine entlang des Umfangsrandes verlaufende Überlappung (4) umfasst, deren Durchmesser größer ist als das Loch (3) und die an einer der Außenwände (19) des Lochs (3) anliegt,
**dadurch gekennzeichnet, dass** des Weiteren ein an der anderen Außenwand des Lochs (3) anliegender erster Ring (5) vorgegeben ist, der auf der der Überlappung (4) gegenüberliegenden Seite angeordnet ist und dessen Durchmesser größer ist als das Loch (3), wobei sich ein Teil der Wand (18) zwischen der Überlappung (4) und dem ersten Ring (5) befindet.

2. Wasserdichte Wanddurchführung nach Anspruch 1, **dadurch gekennzeichnet, dass** ein zweiter an der Überlappung (4) angebrachter Ring (6) vorgesehen ist, dessen Durchmesser größer ist als das Loch (3).

3. Wasserdichte Wanddurchführung nach Anspruch 2, **dadurch gekennzeichnet, dass** die Ringe (5, 6) aus verschiedenen, voneinander getrennten Segmenten bestehen.

4. Wasserdichte Wanddurchführung nach Anspruch 2 oder 3, **dadurch gekennzeichnet, dass** die Ringe (5, 6) an dem Körper (2) der Wanddurchführung mittels Schrauben (7) montiert sind, die sie, mit Hilfe der jeweiligen Muttern (13), näher zueinander bringen, dergestalt, dass die Überlappung (4) axial zwischen der Oberfläche (19) und dem zweiten Ring (6) zusammengedrückt wird, während der erste Ring (5) gegen den Körper (2) der Wanddurchführung und die andere Außenwand des Lochs (3) gepresst wird.

5. Wasserdichte Wanddurchführung nach Anspruch 4, **dadurch gekennzeichnet, dass** der Durchmesser der entlang des Umfangsrandes verlaufenden Überlappung (4) mit dem Durchmesser einer gestuften Erweiterung (17) des Lochs (3) übereinstimmt, so dass die entlang des Umfangsrandes verlaufende Überlappung (4) durch die Wirkung der Schrauben (7) radial zwischen der entlang des Umfangsrandes verlaufenden Fläche der Mündung (17) und dem zweiten Ring (6) aufgeweitet wird.

6. Wasserdichte Wanddurchführung nach Anspruch 4, **dadurch gekennzeichnet, dass** die Ringe (5, 6) nach innen weisende radiale Erweiterungen aufweisen, die mit Durchgangslöchern (9, 12) versehen sind, die in ihrer Position mit Durchgangslöchern (8) übereinstimmen, die in dem Körper (2) der Wanddurchführung ausgebildet sind, um die Schrauben (7) hindurchzuführen.

7. Wasserdichte Wanddurchführung nach Anspruch 6, **dadurch gekennzeichnet, dass** die Durchgangslöcher (8) des abdichtenden Elements (2) Vorsprünge (10) umfassen, welche die Durchgangslöcher (9) in dem zweiten Ring (6) in einer solchen Weise in Eingriff nehmen, dass der Kopf (11) der Schrauben (7) an dem zweiten Ring (6) anliegt und Druck auf die Vorsprünge (10) ausübt und die Löcher (8, 9) fest abdichtet.

8. Wasserdichte Wanddurchführung nach Anspruch 1, **dadurch gekennzeichnet, dass** der geschlossene Teil des Körpers (2) eine Reihe kegelstumpfförmiger Vorsprünge (14) aufweist.

9. Wasserdichte Wanddurchführung nach Anspruch 8, **dadurch gekennzeichnet, dass** diese Vorsprünge (14) aus einer Reihe zylindrischer Abschnitte (16) mit verschiedenen Durchmessern bestehen, die in Richtung des freien Endes allmählich kleiner werden und die an verschiedenen Längen entsprechend dem Durchmesser des Kabels, das durch jeden dieser Abschnitte hindurch verläuft, abgetrennt werden können.

10. Wasserdichte Wanddurchführung nach Anspruch 9, **dadurch gekennzeichnet, dass** der Abschnitt (16) mittels eines Klemmelements gegen die Oberfläche des Elements, das durch ihn hindurch verläuft, gepresst wird.

11. Wasserdichte Wanddurchführung nach Anspruch 10, **dadurch gekennzeichnet, dass** jeder zylindrische Abschnitt (16) der Vorsprünge (14) eine entlang des Umfangs verlaufende Rippe (15) aufweist, die eine axiale Bewegung des Klemmelements verhindert.

## Revendications

1. Traversée murale étanche qui recouvre un trou disposé dans un mur, dans le sol ou dans un plafond, comprenant un corps d'étanchéité (2) sous la forme d'un bouchon, ouvert à l'une de ses extrémités et fermé à l'autre, qui est logé à l'intérieur du trou (3), ledit corps (2) comprenant sur l'un de ses côtés un recouvrement périmétrique (4) d'un plus grand diamètre que le trou (3) qui vient en contact contre l'une des parois extérieures (19) du trou (3), **caractérisée en ce qu'**elle comprend en outre un premier anneau (5) d'un plus grand diamètre que le trou (3) qui est ajusté sur le côté opposé à celui du recouvrement (4), reposant sur l'autre paroi extérieure du trou (3), avec une partie de la paroi (18) entre le recouvrement (4) et le premier anneau (5).

2. Traversée murale étanche selon la revendication 1, **caractérisée en ce qu'**elle comprend un deuxième anneau (6) de plus grand diamètre que le trou (3), qui est ajusté sur le recouvrement (4).

3. Traversée murale étanche selon la revendication 2, **caractérisée en ce que** les anneaux (5, 6) sont constitués de différents segments séparés.

4. Traversée murale étanche selon la revendication 2 ou 3, **caractérisée en ce que** les anneaux (5, 6) sont installés sur le corps (2) de l'élément mural au moyen de boulons (7) qui les rapprochent les uns des autres, avec l'aide des écrous respectifs (13), de sorte que le recouvrement (4) est comprimé axialement entre la surface (19) et le deuxième anneau (6), tandis que le premier anneau (5) est pressé contre le corps (2) de l'élément mural et l'autre paroi murale extérieure du trou (3).

5. Traversée murale étanche selon la revendication 4, **caractérisée en ce que** le diamètre du recouvrement périmétrique (4) coïncide avec le diamètre d'une extension étagée (17) du trou (3), de sorte que par l'action des boulons (7) le recouvrement périmétrique (4) s'étend radialement entre la surface périmétrique du bec (17) et du deuxième anneau (6).

6. Traversée murale étanche selon la revendication 4, **caractérisée en ce que** les anneaux (5, 6) présentent des extensions radiales faisant face vers l'intérieur qui sont munies de trous traversants (9, 12) qui coïncident avec les positions des trous traversants (8) disposés dans le corps (2) de l'élément mural pour l'insertion des boulons (7).

7. Traversée murale étanche selon la revendication 6, **caractérisée en ce que** les trous traversants (8) de l'élément d'étanchéité (2) comprennent des protubérances (10) qui sont mises en prise dans les trous traversants (9) dans le deuxième anneau (6) de telle manière que la tête (11) des boulons (7) vient en contact contre le deuxième anneau (6), exerçant une pression sur les protubérances (10) et assurant une bonne étanchéité des trous (8, 9).

8. Traversée murale étanche selon la revendication 1, **caractérisée en ce que** la partie fermée du corps (2) comprend une série de protubérances de forme frustoconique (14).

9. Traversée murale étanche selon la revendication 8, **caractérisée en ce que** ces protubérances (14) sont constituées d'une série de parties cylindriques (16) de diamètres différents qui deviennent de plus en plus petits vers l'extrémité libre et qui peuvent être séparées à différents niveaux selon le diamètre du câble qui passe à travers chacun d'entre elles.

10. Traversée murale étanche selon la revendication 9, **caractérisée en ce que** la partie (16) est pressée contre la surface de l'élément qui passe à travers elle au moyen d'un élément de serrage.

11. Traversée murale étanche selon la revendication 10, **caractérisée en ce que** chaque partie cylindrique (16) des protubérances (14) ont une nervure périmétrique (15) qui empêche le mouvement axial de l'élément de serrage.
